# EUROPEAN PATENT APPLICATION

(11) **EP 2 876 797 A2**
(43) Date of publication of application: **27.05.2015**
(21) Application number: 14194616.0
(22) Date of filing: 25.11.2014
(51) Int. Cl.: H02M 3/158, H02M 7/493

(54) **Method and apparatus for current auto balancing for parallel converter systems**

(30) Priority: 25.11.2013 US 201314088681
(71) Applicant: Rockwell Automation Technologies, Inc., Mayfield Heights, OH 44124 (US)
(72) Inventor: Ulrich, James A., Hartland, WI Wisconsin 53029 (US); Wei, Lixiang, Meqoun, WI Wisconsin 53092 (US); Rabe, Jerome D., Hales Corners, WI Wisconsin 53130 (US); Riley, Joseph D., Grafton, WI Wisconsin 53024 (US)
(74) Representative: Grünecker Patent- und Rechtsanwälte PartG mbB

(57) **Abstract**

Parallel converter current imbalance control apparatus and methods in which individual converter AC currents are measured for each phase, and the AC voltage control modulation indices associated with the converters having the highest and lowest AC currents for a given phase are adjusted to counteract current imbalance between the converters.

## Description

### BACKGROUND

Power converters are often employed to generate and provide AC output power to a load, such as a single or multi-phase AC motor. In certain situations, it is desirable to connect the AC inverter outputs of two or more motor drives or two or more individual inverters to drive a single motor load. Various applications may also employ two parallel-connected rectifiers between an AC grid or other AC power system and a DC bus. In some situations, moreover, parallel-connected inverters are driven by a single (shared) input rectifier or other common DC source, which may include two or more parallel-connected rectifiers. In these situations, the parallel-connected inverters individually provide AC output waveforms (currents, voltages), and the inverters communicate with one another and/or with a main controller to exchange timing and control information such that the AC outputs are synchronized with respect to phase and amplitude. Moreover, parallel inverter configurations typically employ current sharing inductors connected to the output lines of each of the inverters to facilitate current sharing among the parallel-connected inverter stages. Other circuits are sometimes employed at the inverter outputs, such as R-L (du/dt) filters to mitigate reflected wave issues. The addition of current sharing and/or du/dt inductors in the output lines of the parallel-connected inverters, as well as current imbalances in the AC outputs of the inverters generally requires derating of the overall system. For instance, a parallel configuration of two inverters each having a rated output current of 1 A will generally be rated to provide less than 2 A of output current. Moreover, the derating as an overall percentage is typically lowered as additional inverters are connected in parallel (e.g., 2 parallel-connected inverters may be derated by 10%, whereas 5 parallel-connected inverters may be derated by 20%). Output current imbalance among parallel-connected inverters may result from a variety of other causes, including without limitation mismatches between the switching devices of the individual inverters, including collector-emitter saturation voltage differences (Vce-sat) for inverter IGBTs and/or forward voltage (Vf) mismatches between inverter diodes. In addition, certain installations involve connecting two or more inverter modules in an industrial control cabinet or enclosure, where common or shared DC and/or AC connections are made by way of aluminum or copper busbars. In a typical configuration, one inverter module is connected through a longer bus bar length than is another inverter module, and the bus bar impedance leads to differences in voltages and/or currents provided to and/or from a given inverter module. Moreover, propagation delay differences in the signal path of the switching control signals provided to the inverter switching devices (e.g., IGBT gate drive signals) can lead to output current imbalance between parallel-connected inverters, as can propagation delay differences in the communications cabling connecting the individual inverters and local control boards thereof with one another and/or with a main control device. Thus, the derating required for parallel-connected inverters limits the amount of output current and/or voltage that can be provided in the overall system. The amount of required derating can be combated through use of closely matched components, and/or higher precision components (e.g., IGBTs), but component matching increases the overall system cost, and may prevent or inhibit the ability to use multiple manufacturing sources for a given component. Accordingly, there is need for improved parallel inverter system apparatus and control techniques to mitigate output current imbalance and thus reduce the amount of derating required in such systems without increasing system size, cost or complexity.

### SUMMARY

One or more aspects of the present disclosure are now summarized to facilitate a basic understanding of the disclosure, wherein this summary is not an extensive overview of the disclosure, and is intended neither to identify certain elements of the disclosure, nor to delineate the scope thereof. Rather, the primary purpose of this summary is to present various concepts of the disclosure in a simplified form prior to the more detailed description that is presented hereinafter. The present disclosure provides power conversion systems as well as operating methods and computer readable mediums by which the above and other shortcomings of conventional parallel inverter and/or parallel rectifier system operation can be avoided or mitigated without increasing system cost or complexity, and potentially allowing looser restrictions on system component matching while increasing potential system AC ratings compared with prior approaches.

A power conversion system is provided according to one or more aspects of the present disclosure, including two or more parallel-connected converters such as inverters having AC outputs connected to drive a single load or parallel rectifiers having AC inputs connected to a single AC system, as well as a controller that determines a nominal modulation index for a given AC phase and determines adjusted modulation indices individually associated with a corresponding converter based on individual converter AC current values associated with a given AC phase. The controller further controls pulse width modulation (PWM) operation of the converters for the given AC phase according to the corresponding adjusted modulation indices to counteract AC current imbalance in the power conversion system. In this manner, the controller mitigates imbalance in parallel-connected converters without requiring high precision system components and/or closely matched components and bus bar or cabling impedances. Consequently, higher overall system ratings can be achieved without increasing system cost or size.

The controller in certain embodiments selectively decreases one of the modulation indices and increases another, for example, by adjusting the modulation indices of the converters having the highest and lowest AC currents associated with a given AC phase. Different adjustment techniques may be employed in certain embodiments depending on whether the AC load is motoring or regenerating, for example, lowering the modulation index and hence the controlled AC voltage for the converter having the highest AC current, and increasing the modulation index and hence the AC voltage for the converter having the lowest AC current with respect to a given phase when the load is motoring. Conversely, if the load is regenerating, the converter AC voltage can be increased by raising the modulation index for the converter having the highest AC current, while lowering the AC voltage by decreasing the modulation index for the converter having the lowest AC current.

In certain embodiments, moreover, the controller refrains from adjusting a given converter modulation index beyond a certain predetermined limit, thereby controlling common mode currents within the parallel converter system, and may issue a diagnostic warning or message in the event that the modulation index offset has reached the predetermined limit, as this may indicate the need for replacement of one or more system components or other remedial maintenance.

A method and computer readable medium are provided in accordance with further aspects of the disclosure for operating parallel converters to drive a load. In the method, individual switching converter absolute AC current values associated with a given AC phase are determined, along with a nominal modulation index for the given AC phase. The method further includes offsetting adjusted modulation indices in a given pulse width modulation switching cycle for converters for the given AC phase at least partially according to the individual switching converter absolute AC current values, and controlling converter operation for the given phase according to the corresponding adjusted modulation indices.

In certain implementations a modulation index offset value associated with one of the converters is decreased while the offset value of another converter is increased for the given AC phase at least partially according to the individual switching converter absolute AC current values, and the individual adjusted modulation indices are determined as a sum of the corresponding modulation index offset value and the nominal modulation index for the given AC phase. Certain embodiments involve determining a first converter having a highest absolute AC current value for the given AC phase, determining a second converter having a lowest absolute AC current value, as well as decreasing the adjusted modulation index of one of the first and second converters, and increasing the adjusted modulation index of another of the first and second converters for the given AC phase.

In certain embodiments, the method provides for selectively decreasing the adjusted modulation index of the first switching converter and increasing the adjusted modulation index of the second switching converter when the load is motoring, and vice versa when the load is regenerating. The method may also include selectively refraining from decreasing or increasing an adjusted modulation index beyond a predetermined limit in certain embodiments, whether limited in absolute terms or relative to a computed nominal modulation index, and the method may further involve issuing or initiating a diagnostic signal or warning when an adjusted modulation index reaches the limit.

Further methods and computer readable mediums are provided, including if the load is motoring, selectively decreasing the AC voltage of a first switching converter having a highest absolute AC current value associated with the given AC phase, and selectively increasing the AC voltage of a second switching converter having a lowest absolute AC current value associated with the given AC phase. Otherwise, if the load is regenerating, the method provides for selectively increasing the AC voltage of the first switching converter, and selectively decreasing the AC voltage of the second switching converter associated with the given AC phase.

### BRIEF DESCRIPTION OF THE DRAWINGS

The following description and drawings set forth certain illustrative implementations of the disclosure in detail, which are indicative of several exemplary ways in which the various principles of the disclosure may be carried out. The illustrated examples, however, are not exhaustive of the many possible embodiments of the disclosure. Other objects, advantages and novel features of the disclosure will be set forth in the following detailed description when considered in conjunction with the drawings, in which:
Fig. 1 is a schematic diagram illustrating an exemplary parallel inverter motor drive power conversion system with automatic current balancing implemented by a main controller in accordance with one or more aspects of the present disclosure;
Fig. 2 is a schematic diagram illustrating further details of an embodiment of the main controller in the system of Fig. 1;
Fig. 3 is a flow diagram illustrating an exemplary method for operating parallel inverters to drive a load, including selective modulation index offsetting to counteract current imbalance between parallel inverters in accordance with further aspects of the disclosure;
Fig. 4 is a graph illustrating exemplary output currents from three parallel-connected inverters for a given phase of the parallel inverter power conversion system of Fig. 1 with a motor load motoring, along with modulation index offsets for counteracting current imbalance; and
Fig. 5 is a graph illustrating inverter output currents for a given converter phase with the motor load regenerating, showing modulation index offsets for counteracting current imbalance in accordance with the present disclosure.

### DETAILED DESCRIPTION

Referring now to the figures, several embodiments or implementations are hereinafter described in conjunction with the drawings, wherein like reference numerals are used to refer to like elements throughout, and wherein the various features are not necessarily drawn to scale. The various concepts of the present disclosure can be implemented for controlling AC current imbalance with respect to parallel-connected inverters and/or with regard to controlling AC current imbalance for parallel-connected rectifiers, which are collectively referred to as "converters" or "switching converters". In the illustrated embodiments, the disclosed concepts are described in the context of parallel-connected switching inverter type converters within a power conversion system, although the described concepts can alternatively or in combination be employed in controlling operation of parallel-connected rectifiers.

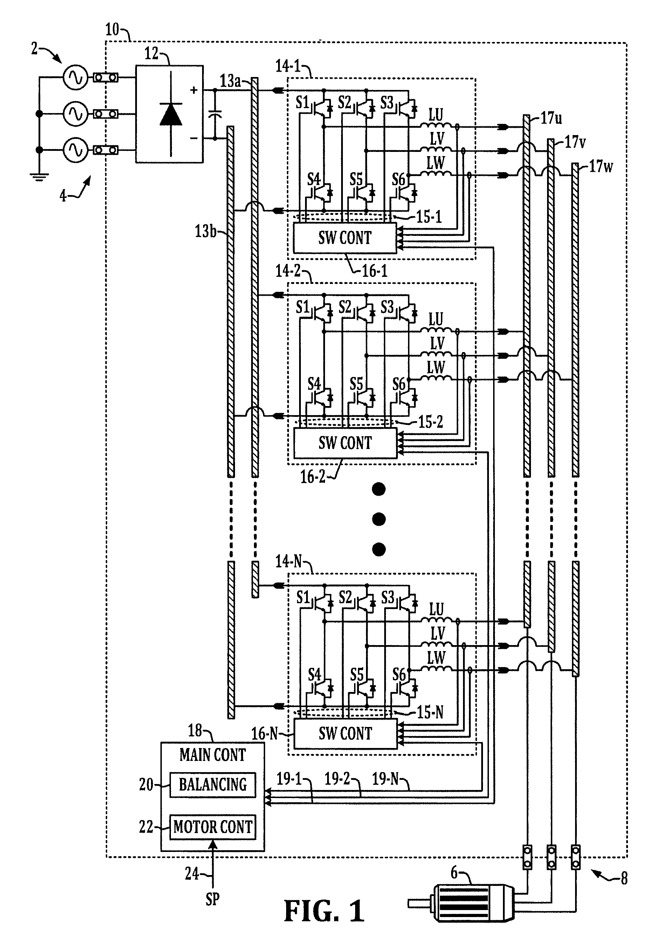

Fig. 1 illustrates a parallel inverter motor drive power conversion system 10 with an integer number N switching inverters 14-1, 14-2 through 14-N, where N is 2 or more. The outputs of the inverters 14 are connected to one another, phase by phase, to drive a single motor load 6, in this case, a three-phase AC motor. The various aspects of the present disclosure are hereinafter described in connection with the multiphase output parallel inverter system 10, although single phase output embodiments are possible, as are different embodiments involving more than three output phases, with two or more inverters 14 connected in parallel to drive a single AC load 6. As seen in Fig. 1, the system 10 receives three-phase input power from a source 2 via connections 4, wherein the illustrated system 2 may be an industrial enclosure having multiple bays for positioning of the inverters 14 as well as one or more rectifiers 12. Other embodiments are possible using single-phase input power and/or multiphase input power from a source 2 having more than three phases. In the illustrated embodiment, moreover, a single shared rectifier 12 is used to provide DC power to the inputs of the inverters 14, although more than one rectifier 12 can be used, and the inverters 14 may, but need not, share a common rectifier 12. The rectifier 12 can be a passive rectifier or active rectification can be used in various embodiments. In addition, the illustrated system 10 is a voltage source converter architecture having a DC bus circuit connected to the output terminals of the rectifier 12, with a capacitance connected between the positive and negative DC bus terminals, although other embodiments are possible in which a current source converter configuration is used, wherein the intermediate DC circuit may provide a regulated DC link current to the inputs of the inverters 14, and may include one or more link chokes or inductances (not shown).

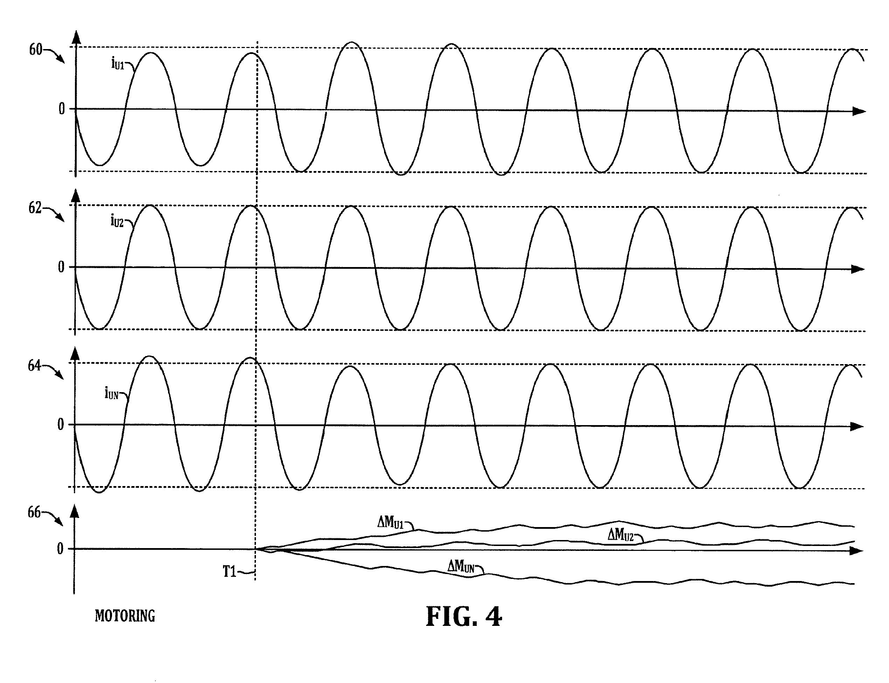

The DC bus in the example of Fig. 4 provides a DC bus voltage to the inverter inputs using positive and negative busbars 13a in 13b, respectively, with suitable electrical connections from the busbars to the rectifier output terminals and to the input terminals of the inverters 14. In this case, for example, the inverter stages 14 include stab type connectors such that modular inverter units 14 can be positioned within a corresponding bay of the system enclosure and make connection between the inverter input terminals in the DC busbars 13. Similarly, the inverter outputs may be connected to AC output busbars 17u, 17v and 17w via corresponding stab connectors providing easy interconnection of the inverter modules to the AC busbars 17. The AC busbars 17, moreover, are electrically connected by suitable cabling to the leads of the driven motor load 6 via connections 8 as schematically shown in Fig. 1.

The individual inverter modules or stages 14-1, 14-2 through 14-N include corresponding local switching controllers 16-1, 16-2...16-N, respectively, providing switching control signals 15-1, 15-2 through 15-N to corresponding switches S1-S6. Any suitable inverter switching devices S1-S6 may be used, including without limitation insulated gate bipolar transistors (IGBTs), silicon controlled rectifiers (SCRs), gate turn-off thyristors (GTOs), integrated gate commutated thyristors (IGCTs), etc. As seen in Fig. 1, the switching devices S1-S6 are individually connected between one of the DC bus terminals 13a or 13b and the corresponding AC output phase U, V or W, and are operative according to a corresponding switching control signal 15 from the corresponding switching controller 16 in order to selectively electrically connect or disconnect the corresponding DC terminal to/from the corresponding AC output line. In practice, the corresponding controller 16 provides inverter switching control signals 15 to the corresponding inverter switches S1-S6 in a manner suitable for conversion of the input DC electrical power to AC output power suitable for controlling operation of the connected motor load 6. As further shown in Fig. 1, output inductors LU, LV and LW are connected in series between the AC terminals of the inverter switching circuits S1-S6 in the AC output busbars 17u, 17v and 17w. The inductors LU, LV and LW in certain embodiments implement current sharing inductor functions, and may be part of various forms of output filter circuits, such as parallel combinations of resistors and inductors to form an RL du/dt filter for controlling reflected wave issues.

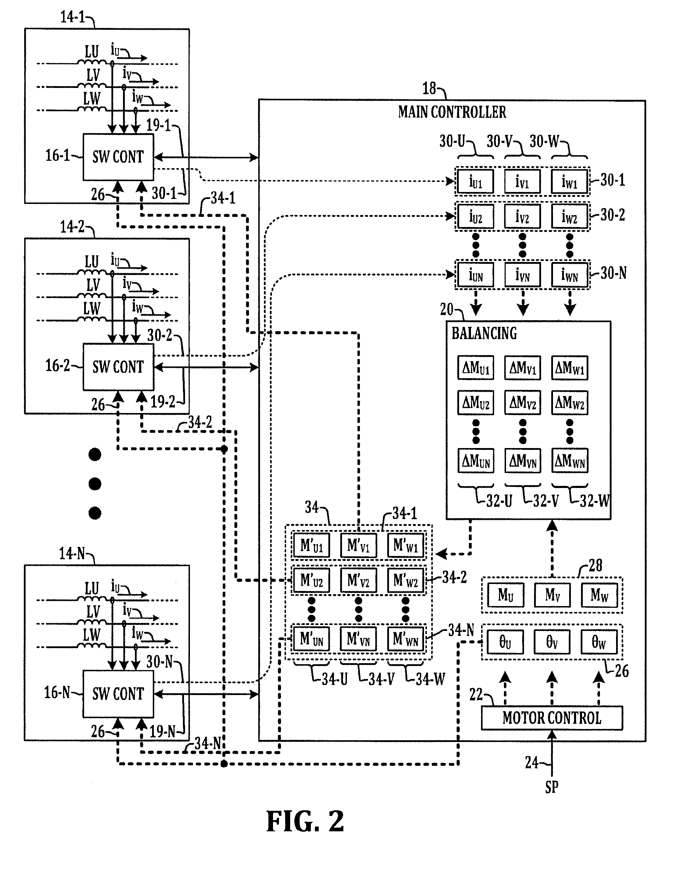

The controllers 16 can include suitable logic or processor-based circuitry and electronic memory storing data and programming code, and may also include signal level amplification and/or driver circuitry (not shown) to provide suitable drive voltage and/or current levels sufficient to selectively actuate the switching devices S1-S6, for instance, such as comparators, carrier wave generators or digital logic/processor elements and signal drivers or combinations of such. Moreover, the controllers 16 can provide the switching control signals 15 according to any suitable pulse width modulation (PWM) technique, including without limitation vector modulation (SVM) carrier-based pulse width modulation, selective harmonic elimination (SHE), etc. In the parallel inverter configuration, moreover, the local controllers 16-1, 16-2 through 16-N are operatively communicatively coupled via the communications cables 19-1, 19-2 through 19N with a main or master controller 18, where the controllers 16,18 can be any suitable hardware, processor-executed software, processor-executed firmware, programmable logic, analog circuitry, etc. which performs normal motor control tasks, including pulse width modulation operation of the local inverter switches S1-S6. In addition, the local switching controllers 16 receive phase-specific signals or values 30-U, 30-V and 30-W (iu, i_{V} and iw in Fig. 2 below) from current sensors located so as to sense the output currents flowing through the output conductors LU, LV and LW.

As further shown in Fig. 2, the main controller 18 includes a balancing component 20 and a motor control component 22, where the various components of the controller 18 may be implemented as processor-executed software or firmware by a processor of the main controller 18 using an associated electronic memory (not shown). Other embodiments are contemplated in which the balancing component 20 and the motor control component 22 may be implemented in one or more of the local controllers 16, and a given local controller 16 in certain embodiments may be configured as a "master" or "main" controller providing the overall motor control functions and balancing functions set forth herein by communicating with the other controllers 16.

The main controller 18 in the illustrated example provides motor control functions 22 according to one or more setpoints 24, such as a motor speed setpoint, torque setpoint, or combinations thereof, etc. In certain implementations, the main controller 18 (or one of the local controllers 16 configured as a master controller) implements one or more closed loop type motor control functions via the motor control component 22 to provide pulse width modulation control of the switches of the parallel-connected inverters 14, by communication via the communications cabling 19. In one possible implementation, the main controller 18 computes modulation indices 28 and corresponding phase angles 26 according to the measured currents 30 and/or one or more further feedback signals or values, such as voltages, torques, motor speed, motor angle, etc., whether sensed or measured or computed or combinations thereof (not shown) for space vector modulation (SVM) operation of the inverters 14. In certain implementations, the unbalanced operation involves the main controller 18 providing a reference vector including a corresponding modulation index 28 (M_{U}, M_{V} and Mw, e.g., expressed as percentages in one example) and angle 26 (θ_{U}, θ_{V} and θ_{W}) for each of the phases U, V and W to each of the inverters 14-1, 14-2 through 14-N. The local switching controllers 16 individually control the corresponding inverter stage switching devices according to the three phase-specific reference vectors represented by the corresponding modulation index 28 and angle 26. With these, the local controllers 16 generate the pulse width modulated switching control signals 15 (Fig. 1) for the corresponding inverter switching circuitry S1-S6.

The main controller 18 further implements the output current balancing component 20 in order to selectively offset the inverter operation relative to the computed modulation indices 28, and provides individualized sets of adjusted modulation indices 34-1, 34-2 through 34-N to the corresponding local inverter controllers 16-1, 16-2 through 16-N via the communications cables 19-1, 19-2 through 19-N. This offsetting or adjustment is done, at least partially, according to the measured current values 30 provided through the cabling 19 from the local switching controllers 16 to the main controller 18. As seen in Fig. 2, in one embodiment, the main controller 18 receives three output current values 30 from each of the inverters 14, including a first set 30-1 of phase-specific output current signals or values i_{U1}, i_{V1} and i_{W1} from the first controller 16-1, a second set 30-2 of three phase-specific output current signals or values i_{U2}, i_{V2} and i_{W2} from the first controller 16-2, etc., and an Nth set 30-N of phase-specific output current signals or values i_{UN}, i_{VN} and i_{WN} from the controller 16-N. The received currents 30 form three sets of N current values for each output phase, including values 30-U (i_{U1}, i_{U2} through i_{UN}) for phase U, 30-V (i_{V1}, i_{V2} through i_{VN}) for phase V and values 30-W (i_{W1}, i_{W2} through i_{WN}) for phase W.

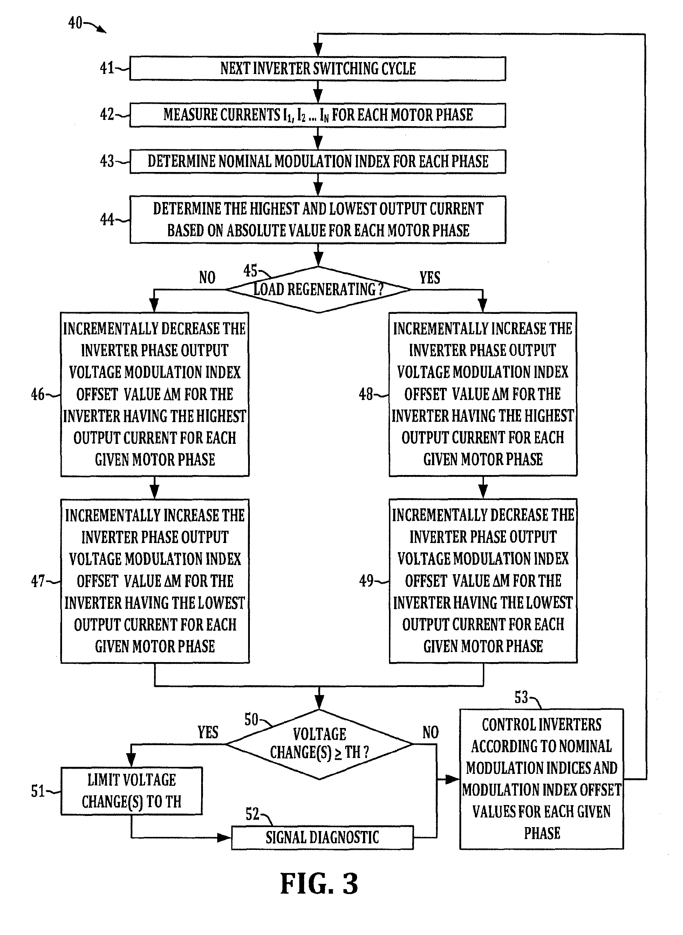

The main controller 18 implements the balancing component 20 which operates generally according to the method 40 illustrated in Fig. 3 below, and selectively incrementally offsets adjusted modulation indices 34 in a given PWM switching cycle for the inverters 14 for one, some or all of the output phases U, V and/or W at least in part based on the individual switching inverter output current values 30 so as to counteract output current imbalance between the inverters 14 for the corresponding output phase. The adjusted modulation indices 34 for a given output phase U, V, W represent changes or offsets from the currently computed corresponding modulation index 28 for use in pulse width modulating the corresponding inverter 14, and may be expressed in terms of percentages in one example. The main controller 18 operates to compute the adjusted modulation indices 34 as sets 34-U (including M'_{U1}, M'_{U2} through M'_{UN}), 34-V (M'_{V1}, M'_{V2} through M'_{VN}) and 34-W (M'_{W1}, M'_{W2} through M'_{WN}) of N indices for each output phase U, V and W in one example as individual sums of the corresponding computed phase modulation index 28 with a computed modulation index offset or change value 32 (e.g., M'_{U1} = M_{U} + ΔM_{U1}, M'_{U2} = M_{U} + ΔM_{U2}, M'_{VN} = M_{U} + ΔM_{VN}, etc.). As shown in Fig. 2, the adjusted modulation indices 34 form N inverter-specific sets 34-1 (M'_{U1}, M'_{V1} and M'_{W1} for inverter 14-1), 34-2 (M'_{U2}, M'_{V2} and M'_{W2} for inverter 14-2) through 34-N (M'_{UN}, M'_{VN} and M'_{WN} for inverter 14-N), each having three phase-specific adjusted modulation indices.

In one embodiment, the controller 18 selectively updates one or more of the modulation index offset or change values 32 (ΔM_{j,k}) in each PWM switching cycle according to the output current signals or values i_{U,k}, i_{V,k} and i_{W,k} for each output phase and adds these to the most recent modulation indices 28 (M_{U}, M_{V} and M_{W}) to obtain the adjusted modulation indices 34, and provides the inverter-specific adjusted modulation indices sets 34-1, 34-2...34-N to the local controllers 16-1, 16-2...16-N, respectively, along with the most recent phase specific angles 26 (θ_{U}, θ_{V} and θ_{W}) computed via the motor control component 22. The local controllers 16 then utilize the received reference vectors (including an adjusted modulation index 34 and a phase angle 26 for each output phase U, V and W) to generate the corresponding switching control signals 15 for PWM operation of the switches S1-S6 by digital space vector modulation and/or analog sine-triangle pulse width modulation in certain non-limiting examples. For instance, the first controller 16-1 receives the angles θ_{U}, θ_{V} and θw (26) and the adjusted modulation index set 34-1 (M'_{U1}, M'_{V1} and M'_{W1}) via the cable 19-1 from the main controller 18, and uses θ_{U} and M'_{U1} to control the switches S1 and S4 associated with the U output phase by implementing two corresponding active vectors and a zero vector according to computed dwell times. Similarly, the controller 16-1 uses θv and M'_{V1} to control switches S2 and S5 for phase U and uses θ_{W} and M'_{W1} to control switches S3 and S6 for phase W during the current switching cycle.

In certain embodiments, the local controllers 16 compute the dwell times and select the appropriate active and zero vectors and generate the corresponding switching control signals 15 accordingly. In other embodiments, analog sine-triangle pulse width modulation circuitry is implemented in the controllers 16 for generating the switching signals 15. In other embodiments, the controller 18 performs the current balancing by selective adjustment of the modulation indices for only one or two of the phases U, V or W. In various embodiments, moreover, the controller 18 implements the selective modulation index adjustment for output current balancing only with respect to a subset of the controlled inverters 14. In this manner, the central controller 18 coordinates the PWM switching of the N parallel inverters 14 via the communications connections 19, through which the local phase output current values 30 are obtained for computing the balancing offset values 32 and the computed reference vectors 26, 34 are sent to the local controllers 16. This coordination can be augmented by transmission of synchronization signaling via the cabling 19 as needed such that the carriers used in the parallel-connected inverter outputs are synchronized to mitigate circulating currents, with carrier wave information sent through a digital data path via cables 19 in certain implementations.

Referring also to Fig. 3, the main controller 18 (or one of the local controllers 16 configured as a master or main controller) performs the automatic output current balancing generally according to a process or method 40 seen in Fig. 3. While the exemplary method 40 is depicted and described in the form of a series of acts or events, it will be appreciated that the various methods of the disclosure are not limited by the illustrated ordering of such acts or events except as specifically set forth herein. In this regard, except as specifically provided hereinafter, some acts or events may occur in different order and/or concurrently with other acts or events apart from those illustrated and described herein, and not all illustrated steps may be required to implement a process or method in accordance with the present disclosure. The illustrated methods may be implemented in hardware, processor-executed software, or combinations thereof, in order to provide automated parallel inverter output current balancing as described herein, and various embodiments or implementations include non-transitory computer readable mediums having computer-executable instructions performing the illustrated and described methods. For instance, the method 40 may be implemented using one or more processors associated with the controller 18, by executing instructions stored in an electronic memory operatively associated with the controller 18.

The process 40 begins at 41 to initiate a new inverter switching cycle, and the local currents i_{U,k}, i_{V,k} and i_{W,k} are measured at 42 for each output phase U, V and W. At 43 in Fig. 3, the controller 18 determines a nominal modulation index 28 for each output phase, along with a corresponding angle 26 (shown in Fig. 2). At 44, the controller 18 determines inverter 14 associated with the highest and lowest output current for each motor phase. In the illustrated three-phase example, one embodiment of the determination at 44 involves computing the absolute values of each inverter's output current for each phase, and comparing all the output currents associated with a given phase. This comparison can be based on absolute current values determined according to any suitable mathematical technique in certain embodiments. From this, the controller 18 determines which inverter output current is the highest absolute value for each given phase, as well as which is the lowest absolute value for each given phase. As noted above, this may be selectively done for fewer than all of the phases in certain embodiments.

A determination is made at 45 as to whether the load is regenerating. If not (NO at 45), the process 40 proceeds at 46 to incrementally decrease the inverter phase output voltage modulation index offset value 32 by a fixed or variable increment amount, for example by 0.005% in one non-limiting embodiment, for the inverter having the highest output current for each motor phase for a motoring output load 6. In this regard, lowering the modulation index offset value 32 will have the effect of decreasing the output current from the corresponding inverter 14 for the associated motor phase in the case where the load 6 is motoring. At 47, the controller 18 incrementally increases the inverter phase output voltage modulation index offset value 32 for the inverter having the lowest output current for each given motor phase. This results in an increase in the output current for that inverter 14 for the associated output phase. The controller 18 maintains the previously computed modulation index for subsequent use with or without offsetting in the next PWM switching cycle.

In certain embodiments, a determination is made at 50 as to whether the proposed voltage changes (modulation index offset values 32) equal or exceed a predetermined value or threshold TH, such as 0.5% in one non-limiting example. If so (YES at 50), the controller 18 limits the output voltage change at 51 by refraining from increasing or decreasing the associated modulation index offset value 32 beyond the threshold amount, and may optionally signal a diagnostic message for transmission to a user interface or networked device (not shown) operatively coupled with the system 10 at 52. In this regard, the automatic current balancing can optionally be performed only up to a predetermined amount of output voltage offsetting, for example, to control common mode current flow within the parallel-connected inverter system 10. A diagnostic signal or message at 52 may indicate to an operator, for example, that an external component such as a paralleling inductor has a value significantly out of tolerance and that maintenance should be undertaken. At 53 in Fig. 3, the inverters 14 are controlled according to the nominal modulation indices (28 in Fig. 2) and according to the modulation index offset values (32 in Fig. 2) for each given phase, and the process 40 returns to the next inverter switching cycle at 41.

Fig. 4 illustrates graphs 60, 62 and 64 respectively showing exemplary simulated phase output current curves i_{U1}, i_{U2} and i_{UN} for the first output phase U for a motoring load 6, along with a graph 66 illustrating the modulation index offset values 32-U for the U phase. In this example, the automatic output current balancing operation of the component 20 in the main controller 18 is initially inhibited, and is then activated at time T1. Prior to activation of the automatic balancing component 20 at T1, the U phase output current i_{U1} provided by the first inverter 14-1 is lower than the corresponding phase output currents i_{U2} and i_{UN}, and the output current i_{UN} from the Nth inverter 14-N is higher than the other output currents i_{U1} and i_{U2}. Moreover, prior to the automatic balancing operation at T1, all of the inverters 14-1 through 14-N are operated according to the same (nominal) modulation index for phase U. In this case, the modulation index offset value ΔM_{UN} for phase U provided to the Nth inverter 14-N is decreased and the modulation index offset value ΔM_{U1} for phase U provided to the first inverter 14-1 is increased at time T1. As seen in Fig. 4, moreover, the automatic balancing component 20 continues selective adjustment of the offset values ΔM for subsequent PWM switching cycles, by adjusting the offsets for the inverters having the highest and lowest output current absolute values for the given phase, with the controller 18 thus regulating the output current balance for phase U over time. It will be appreciated that similar operation results for the other output phases V and W (not shown).

In the case where the load is regenerating (YES at 45 in Fig. 3), the controller 18 incrementally increases the inverter phase output voltage modulation index offset value 32 at 48 (e.g., by a predetermined increment value, such as 0.005% in one non-limiting example) for the inverter 14 having the highest output current for each given motor phase, and incrementally decreases the inverter phase output voltage modulation index offset value for the inverter having the lowest output current for each given motor phase. In this regard, for a regenerating load 6, increasing the output voltage modulation index at 48 causes the associated inverter 14 to increase the output voltage for a corresponding phase, and thus that inverter output phase will oppose the regenerating current provided by the load 6, thereby reducing the associated phase current for that inverter 14, and the converse is true with respect to the decreased output voltage adjustment at 49 for the inverter having the lowest output current.

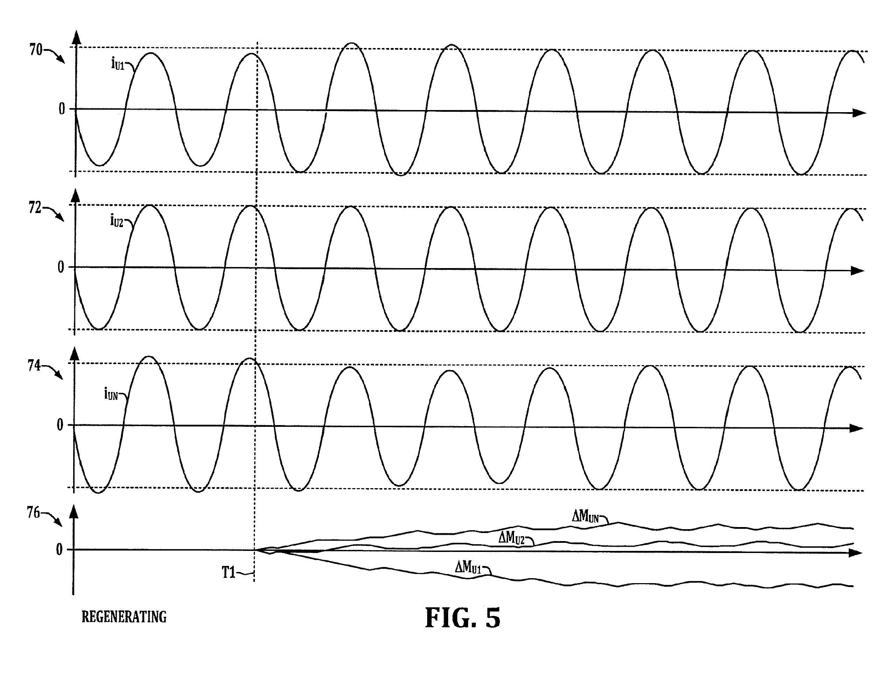

Fig. 5 shows graphs 70, 72 and 74 illustrating the simulated phase output current curves i_{U1}, i_{U2} and i_{UN} for the first output phase U for a regenerating load 6 (e.g., where power flows toward the DC bus for the inverter 14), along with a graph 76 illustrating the modulation index offset values 32-U for phase U. In this case (e.g., YES at 45 in Fig. 3), the imbalance in the output currents of the individual inverters 14 is addressed for regenerating loads by incrementally increasing the modulation index offset value ΔM_{UN} associated with the Nth inverter which has the highest absolute current value at T1, as well as selectively incrementally decreasing the offset value ΔM_{U1} for the first inverter 14-1 having the lowest absolute current value.

While the illustrated embodiments employ incremental changes for the inverters having the highest and lowest output current values for a given phase, other embodiments are possible in which the incremental changes are not of equal step size, for example, with the amount of change being based on some computed value, such as the difference between the absolute current value of a particular inverter phase and the average of all the inverter output currents for that phase, etc.

The balancing concepts of the present disclosure advantageously adapt to changes in component value and/or propagation delay mismatches over time, thus compensating for changes that vary with system temperature, or other environmental variables. In addition, the output current balancing aspects of the present disclosure operate to regulate the imbalance even in the presence of changes to the nominal computed modulation indices 28, and therefore the balancing component 20 operates in conjunction with the closed loop motor control component 22 across the operating ranges of the constituent inverters 14 and thus throughout the overall operating range of the entire system 10. Furthermore, as discussed above, the adaptation of the parallel-connected inverters 14 with respect to output current imbalance advantageously allows reduction in the amount of derating for parallel inverter and/or parallel rectifier systems compared with conventional approaches, and does this without introduction of any additional cost or complexity to the system 10. The concepts of the present disclosure thus facilitate extension of the rating for drives having parallel inverters 14 (i.e. less derating), and provide closed loop imbalance regulation to facilitate immunity to component variations such as IGBT Vce(sat) and diode Vf voltage variation in the inverters 14, as well as to communication delays associated with variable communications cabling lengths, and to impedance variations in DC and/or AC bus bars 13, 17 or other connection impedances. In addition, the system compensates for propagation delays associated with the actual switching of the inverter switching devices S1-S6.

The above examples are merely illustrative of several possible embodiments of various aspects of the present disclosure, wherein equivalent alterations and/or modifications will occur to others skilled in the art upon reading and understanding this specification and the annexed drawings. In particular regard to the various functions performed by the above described components (assemblies, devices, systems, circuits, and the like), the terms (including a reference to a "means") used to describe such components are intended to correspond, unless otherwise indicated, to any component, such as hardware, processor-executed software, or combinations thereof, which performs the specified function of the described component (i.e., that is functionally equivalent), even though not structurally equivalent to the disclosed structure which performs the function in the illustrated implementations of the disclosure. In addition, although a particular feature of the disclosure may have been disclosed with respect to only one of several implementations, such feature may be combined with one or more other features of the other implementations as may be desired and advantageous for any given or particular application. Also, to the extent that the terms "including", "includes", "having", "has", "with", or variants thereof are used in the detailed description and/or in the claims, such terms are intended to be inclusive in a manner similar to the term "comprising".

The **following** is **a** list of further preferred embodiments of the invention:
Embodiment 1. A power conversion system, comprising:
   a plurality of switching converters having AC terminals connected together; and a controller programmed for a given AC phase of the plurality of switching converters to:
      determine a nominal modulation index,
      determine a plurality of adjusted modulation indices individually associated with a corresponding one of the plurality of switching converters at least partially according to:
         individual switching converter AC current values associated with the given AC phase, and
         the nominal modulation index, and
      control pulse width modulation operation of the plurality of switching converters for the given AC phase according to the corresponding adjusted modulation indices to counteract AC current imbalance in the power conversion system.
Embodiment 2. The power conversion system of embodiment 1, wherein the controller is programmed for each pulse width modulation switching cycle and for each AC phase of the plurality of switching converters to:
   determine a nominal modulation index;
   selectively decrease one of the adjusted modulation indices; and
   selectively increase another one of the adjusted modulation indices.
Embodiment 3. The power conversion system of embodiment 2, wherein the controller is programmed for each pulse width modulation switching cycle and for each AC phase of the plurality of switching converters to:
   determine a first one of the plurality of switching converters having a highest absolute value of the individual switching converter AC current values;
   determine a second one of the plurality of switching converters having a lowest absolute value of the individual switching converter AC current values;
   selectively decrease the adjusted modulation index of one of the first and second switching converters; and
   selectively increase the adjusted modulation index of another of the first and second switching converters.
Embodiment 4. The power conversion system of embodiment 3, wherein the controller is programmed for each pulse width modulation switching cycle in which the load is motoring, and for each AC phase of the plurality of switching converters to:
   selectively decrease the adjusted modulation index of the first one of the plurality of switching converters; and
   selectively increase the adjusted modulation index of the second one of the plurality of switching converters.
Embodiment 5. The power conversion system of embodiment 4, wherein the controller is programmed for each pulse width modulation switching cycle and for each AC phase of the plurality of switching converters to selectively refrain from decreasing or increasing an adjusted modulation index beyond a predetermined limit.
Embodiment 6. The power conversion system of embodiment 4, wherein the controller is programmed for each pulse width modulation switching cycle to:
   selectively decrease a modulation index offset value of the first one of the plurality of switching converters for each AC phase;
   selectively increase a modulation index offset value of the second one of the plurality of switching converters for each AC phase; and
   determine the individual adjusted modulation indices as a sum of the corresponding modulation index offset value and the nominal modulation index for each AC phase of the plurality of switching converters.
Embodiment 7. The power conversion system of embodiment 3, wherein the controller is programmed for each pulse width modulation switching cycle in which the load is regenerating, and for each AC phase of the plurality of switching converters to:
   selectively increase the adjusted modulation index of the first one of the plurality of switching converters; and
   selectively decrease the adjusted modulation index of the second one of the plurality of switching converters.
Embodiment 8. The power conversion system of embodiment 7, wherein the controller is programmed for each pulse width modulation switching cycle and for each AC phase of the plurality of switching converters to selectively refrain from decreasing or increasing an adjusted modulation index beyond a predetermined limit.
Embodiment 9. The power conversion system of embodiment 7, wherein the controller is programmed for each pulse width modulation switching cycle to:
   selectively increase a modulation index offset value of the first one of the plurality of switching converters for each AC phase;
   selectively decrease a modulation index offset value of the second one of the plurality of switching converters for each AC phase; and
   determine the individual adjusted modulation indices as a sum of the corresponding modulation index offset value and the nominal modulation index for each AC phase of the plurality of switching converters.
Embodiment 10. The power conversion system of embodiment 2, wherein the controller is programmed for each pulse width modulation switching cycle and for each AC phase of the plurality of switching converters to selectively refrain from decreasing or increasing an adjusted modulation index beyond a predetermined limit.
Embodiment 11. A method for operating parallel converters to drive a load, the method comprising:
   determining individual switching converter absolute AC current values associated with a given AC phase of the plurality of switching converters;
   determining a nominal modulation index for the given AC phase;
   selectively incrementally offsetting at least two adjusted modulation indices in a given pulse width modulation switching cycle for converters for the given AC phase at least partially according to the individual switching converter absolute AC current values to counteract AC current imbalance between the converters for the given AC phase; and
   controlling pulse width modulation operation of the plurality of switching converters for the given AC phase according to the corresponding adjusted modulation indices.
Embodiment 12. The method of embodiment 11, wherein selectively incrementally offsetting the at least two adjusted modulation indices comprises, for each pulse width modulation switching cycle:
   selectively decreasing a modulation index offset value associated with one of the plurality of switching converters for the given AC phase at least partially according to the individual switching converter absolute AC current values;
   selectively increasing a modulation index offset value associated with another one of the plurality of switching converters for the given AC phase at least partially according to the individual switching converter absolute AC current values; and
   determining individual adjusted modulation indices as a sum of the corresponding modulation index offset value and the nominal modulation index for the given AC phase.
Embodiment 13. The method of embodiment 12, comprising:
   determining a first switching converter having a highest absolute value of the individual switching converter AC current values for the given AC phase;
   determining a second switching converter having a lowest absolute value of the individual switching converter AC current values for the given AC phase;
   selectively decreasing the adjusted modulation index of one of the first and second switching converters for the given AC phase; and
   selectively increasing the adjusted modulation index of another of the first and second switching converters for the given AC phase.
Embodiment 14. The method of embodiment 13, comprising:
   for each pulse width modulation switching cycle in which the load is motoring, and for the given phase:
      selectively decreasing the adjusted modulation index of the first switching converter; and
      selectively increasing the adjusted modulation index of the second switching converter.
Embodiment 15. The method of embodiment 14, comprising selectively refraining from decreasing or increasing an adjusted modulation index beyond a predetermined limit.
Embodiment 16. The method of embodiment 13, comprising:
   for each pulse width modulation switching cycle in which the load is regenerating, and for the given phase:
      selectively increasing the adjusted modulation index of the first switching converter; and
      selectively decreasing the adjusted modulation index of the second switching converter.
Embodiment 17. The method of embodiment 16, comprising selectively refraining from decreasing or increasing an adjusted modulation index beyond a predetermined limit.
Embodiment 18. The method of embodiment 11, comprising selectively refraining from incrementally offsetting an adjusted modulation index beyond a predetermined limit.
Embodiment 19. A non-transitory computer readable medium with computer executable instructions for:
   determining individual switching converter absolute AC current values associated with a given AC phase of a plurality of switching converters used to drive a single load;
   if the load is motoring, selectively decreasing the AC voltage of a first switching converter having a highest absolute AC current value associated with the given AC phase, and selectively increasing the AC voltage of a second switching converter having a lowest absolute AC current value associated with the given AC phase; and
   if the load is regenerating, selectively increasing the AC voltage of the first switching converter associated with the given AC phase, and selectively decreasing the AC voltage of the second switching converter associated with the given AC phase.
Embodiment 20. The non-transitory computer readable medium of embodiment 19, comprising computer executable instructions for selectively refraining from increasing or decreasing the AC voltage of a switching converter beyond a predetermined limit.

## Claims

1. A power conversion system (10), comprising:
a plurality of switching converters (14) having AC terminals connected together; and
a controller (16, 18) programmed for a given AC phase (U, V, W) of the plurality of switching converters (14) to:
determine (43) a nominal modulation index (28),
determine (46-49) a plurality of adjusted modulation indices (34) individually associated with a corresponding one of the plurality of switching converters (14) at least partially according to:
individual switching converter AC current values (30) associated with the given AC phase (U, V, W), and
the nominal modulation index (28), and
control (53) pulse width modulation operation of the plurality of switching converters (14) for the given AC phase (U, V, W) according to the corresponding adjusted modulation indices (34) to counteract AC current imbalance in the power conversion system (10).

2. The power conversion system (10) of claim 1, wherein the controller (16, 18) is programmed for each pulse width modulation switching cycle and for each AC phase (U, V, W) of the plurality of switching converters (14) to:
determine (43) a nominal modulation index (28);
selectively decrease (46-49) one of the adjusted modulation indices (34); and
selectively increase (46-49) another one of the adjusted modulation indices (34).

3. The power conversion system (10) of claim 2, wherein the controller (16, 18) is programmed for each pulse width modulation switching cycle and for each AC phase (U, V, W) of the plurality of switching converters (14) to:
determine (44) a first one of the plurality of switching converters (14) having a highest absolute value of the individual switching converter AC current values (30);
determine (44) a second one of the plurality of switching converters (14) having a lowest absolute value of the individual switching converter AC current values (30);
selectively decrease (46-49) the adjusted modulation index (34) of one of the first and second switching converters (14); and
selectively increase (46-49) the adjusted modulation index (34) of another of the first and second switching converters (14).

4. The power conversion system (10) of claim 3, wherein the controller (16, 18) is programmed for each pulse width modulation switching cycle in which the load (6) is motoring, and for each AC phase (U, V, W) of the plurality of switching converters (14) to:
selectively decrease (46) the adjusted modulation index (34) of the first one of the plurality of switching converters (14); and
selectively increase (47) the adjusted modulation index (34) of the second one of the plurality of switching converters (14);
wherein:
the controller (16, 18) is programmed for each pulse width modulation switching cycle and for each AC phase (U, V, W) of the plurality of switching converters (14) to selectively refrain from decreasing (46) or increasing (47) an adjusted modulation index (34) beyond a predetermined limit; or
the controller (16, 18) is programmed for each pulse width modulation switching cycle to selectively decrease (46) a modulation index offset value (32) of the first one of the plurality of switching converters (14) for each AC phase (U, V, W), selectively increase (47) a modulation index offset value (32) of the second one of the plurality of switching converters (14) for each AC phase (U, V, W), and determine the individual adjusted modulation indices (34) as a sum of the corresponding modulation index offset value (32) and the nominal modulation index (28) for each AC phase (U, V, W) of the plurality of switching converters (14).

5. The power conversion system (10) of claim 3, wherein the controller (16, 18) is programmed for each pulse width modulation switching cycle in which the load (6) is regenerating, and for each AC phase (U, V, W) of the plurality of switching converters (14) to:
selectively increase (48) the adjusted modulation index (34) of the first one of the plurality of switching converters (14); and
selectively decrease (49) the adjusted modulation index (34) of the second one of the plurality of switching converters (14);
wherein:
the controller (16, 18) is programmed for each pulse width modulation switching cycle and for each AC phase (U, V, W) of the plurality of switching converters (14) to selectively refrain from decreasing (46) or increasing (47) an adjusted modulation index (34) beyond a predetermined limit; or
the controller (16, 18) is programmed for each pulse width modulation switching cycle to selectively increase (48) a modulation index offset value (32) of the first one of the plurality of switching converters (14) for each AC phase (U, V, W), selectively decrease (49) a modulation index offset value (32) of the second one of the plurality of switching converters (14) for each AC phase (U, V, W), determine the individual adjusted modulation indices (34) as a sum of the corresponding modulation index offset value (32) and the nominal modulation index (28) for each AC phase (U, V, W) of the plurality of switching converters (14).

6. The power conversion system (10) of claim 2, wherein the controller (16, 18) is programmed for each pulse width modulation switching cycle and for each AC phase (U, V, W) of the plurality of switching converters (14) to selectively refrain from decreasing (46) or increasing (47) an adjusted modulation index (34) beyond a predetermined limit.

7. A method (40) for operating parallel converters (14) to drive a load (6), the method (40) comprising:
determining (42) individual switching converter absolute AC current values (30) associated with a given AC phase (U, V, W) of the plurality of switching converters (14);
determining (43) a nominal modulation index (28) for the given AC phase (U, V, W);
selectively incrementally offsetting (46-49) at least two adjusted modulation indices (34) in a given pulse width modulation switching cycle for converters (14) for the given AC phase (U, V, W) at least partially according to the individual switching converter absolute AC current values (30) to counteract AC current imbalance between the converters (14) for the given AC phase (U, V, W); and
controlling (53) pulse width modulation operation of the plurality of switching converters (14) for the given AC phase (U, V, W) according to the corresponding adjusted modulation indices (34).

8. The method (40) of claim 7, wherein selectively incrementally offsetting (46-49) the at least two adjusted modulation indices (34) comprises, for each pulse width modulation switching cycle:
selectively decreasing (46) a modulation index offset value (32) associated with one of the plurality of switching converters (14) for the given AC phase (U, V, W) at least partially according to the individual switching converter absolute AC current values (30);
selectively increasing (47) a modulation index offset value (32) associated with another one of the plurality of switching converters (14) for the given AC phase (U, V, W) at least partially according to the individual switching converter absolute AC current values (30); and
determining individual adjusted modulation indices (34) as a sum of the corresponding modulation index offset value (32) and the nominal modulation index (28) for the given AC phase (U, V, W).

9. The method (40) of claim 8, comprising:
determining (44) a first switching converter (14) having a highest absolute value of the individual switching converter AC current values (30) for the given AC phase (U, V, W);
determining (44) a second switching converter (14) having a lowest absolute value of the individual switching converter AC current values (30) for the given AC phase (U, V, W);
selectively decreasing (46-49) the adjusted modulation index (34) of one of the first and second switching converters (14) for the given AC phase (U, V, W); and
selectively increasing (46-49) the adjusted modulation index (34) of another of the first and second switching converters (14) for the given AC phase (U, V, W).

10. The method (40) of claim 9, comprising:
for each pulse width modulation switching cycle in which the load (6) is motoring, and for the given phase (U, V, W):
selectively decreasing (46) the adjusted modulation index (34) of the first switching converter (14); and
selectively increasing (47) the adjusted modulation index (34) of the second switching converter (14).

11. The method (40) of claim 9, comprising:
for each pulse width modulation switching cycle in which the load (6) is regenerating, and for the given phase (U, V, W):
selectively increasing (48) the adjusted modulation index (34) of the first switching converter (14); and
selectively decreasing (49) the adjusted modulation index (34) of the second switching converter (14).

12. The method (40) of claim 10 or 11, comprising selectively refraining from decreasing (46) or increasing (47) an adjusted modulation index (34) beyond a predetermined limit.

13. The method (40) of claim 7, comprising selectively refraining from incrementally offsetting (46-49) an adjusted modulation index (34) beyond a predetermined limit.

14. A non-transitory computer readable medium with computer executable instructions for:
determining (42) individual switching converter absolute AC current values (30) associated with a given AC phase (U, V, W) of a plurality of switching converters (14) used to drive a single load (6);
if the load (6) is motoring, selectively decreasing the AC voltage of a first switching converter (14) having a highest absolute AC current value (30) associated with the given AC phase (U, V, W), and selectively increasing the AC voltage of a second switching converter (14) having a lowest absolute AC current value (30) associated with the given AC phase (U, V, W); and
if the load (6) is regenerating, selectively increasing the AC voltage of the first switching converter (14) associated with the given AC phase (U, V, W), and selectively decreasing the AC voltage of the second switching converter (14) associated with the given AC phase (U, V, W).

15. The non-transitory computer readable medium of claim 14, comprising computer executable instructions for selectively refraining from increasing or decreasing the AC voltage of a switching converter (14) beyond a predetermined limit.
